# EUROPEAN PATENT APPLICATION

(11) **EP 2 717 521 A1**
(43) Date of publication of application: **09.04.2014**
(21) Application number: 12792885.1
(22) Date of filing: 09.05.2012
(51) Int. Cl.: H04L 12/56, H04M 11/00

(54) **COMMUNICATION CONTROL DEVICE**

(30) Priority: 31.05.2011 JP 2011121237
(71) Applicant: NEC Corporation, Tokyo 108-8001 (JP)
(72) Inventor: MAKIMURA, Shingo, Tokyo 108-8001 (JP); WATANABE, Takeshi, Tokyo 108-8001 (JP); MURAKAMI, Tomoki, Tokyo 108-8001 (JP); HASHIGUCHI, Atsushi, Tokyo 108-8001 (JP); KURIHARA, Hiroshi, Tokyo 108-8001 (JP)
(74) Representative: Betten & Resch
(86) International application number: PCT/JP2012/003014
(87) International publication number: WO 2012/164830

(57) **Abstract**

A communication control device 100 initiates a session with a communication device by executing a sequence including a plurality of communication events. The communication control device includes: a scenario information accepting part 101 for accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and a scenario executing part 102 for, when the communication event associated with the sequence execution instruction information included by the accepted scenario information is executed while a certain sequence is being executed, newly executing a sequence based on the synchronization information included by the sequence execution instruction information.

## Description

### TECHNICAL FIELD

The present invention relates to a communication control device that executes a sequence including a plurality of communication events and thereby initiates a session with a communication device.

### BACKGROUND ART

A communication control device that executes a sequence including a plurality of communication events and thereby initiates a session with a communication device is known. As one of such communication control devices, a communication control device described in Patent Document 1 accepts scenario information that is associated with communication destination specification information specifying a communication destination and also associated with the type of a response from the communication destination and that includes transfer destination specification information specifying a transfer destination.

Upon reception of a message for initiating a session with a communication destination specified by communication specification information, the communication control device acquires a response from the communication destination, and transfers the message to a transfer destination specified by transfer destination specification information associated with the type of the response. In this manner, the communication control device executes a sequence based on accepted scenario information.

Patent Document 1: Japanese Unexamined Patent Application Publication No. 2006-203311

When receiving a message for initiating a session from a communication device and simultaneously initiating another session relating to the session, a communication control device may need to almost simultaneously execute the same communication events between sequences for initiating the respective sessions.

Further, there is a case where a communication control device needs to match media information (e.g., information written in accordance with SDP (Session Description Protocol)) between sequences, whereas there is a case where a communication control device does not need to do so. Thus, a communication control device needs to control synchronism between sequences.

However, the communication control device described in Patent Document has a problem that it is impossible to control synchronism between sequences based on scenario information.

### SUMMARY

Accordingly, an object of the present invention is to provide a communication control device capable of solving the abovementioned problem, "it is impossible to control synchronism between sequences based on scenario information."

In order to achieve the object, a communication control device of an aspect of the present invention is a device initiating a session with a communication device by executing a sequence including a plurality of communication events executed one by one in order.

This communication control device includes:
a scenario information accepting means for accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
a scenario executing means for executing a certain sequence and, when the communication event associated with the sequence execution instruction information included by the accepted scenario information is executed while the sequence is being executed, newly executing a sequence based on the synchronization information included by the sequence execution instruction information.

Further, a communication control method of another aspect of the present invention is a method for initiating a session with a communication device by executing a sequence including a plurality of communication events executed one by one in order.

This communication control method is a method including:
accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
executing a certain sequence and, when the communication event associated with the sequence execution instruction information included by the accepted scenario information is executed while the sequence is being executed, newly executing a sequence based on the synchronization information included by the sequence execution instruction information.

Further, a communication control program of another aspect of the present invention is a program including instructions for causing a communication control device, which initiates a session with a communication device by executing a sequence including a plurality of communication events executed one by one in order, to perform operations of:
accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
executing a certain sequence and, when the communication event associated with the sequence execution instruction information included by the accepted scenario information is executed while the sequence is being executed, newly executing a sequence based on the synchronization information included by the sequence execution instruction information.

With the configurations as described above, the present invention enables control of synchronism between sequences based on scenario information.

### BRIEF DESCRIPTION OF DRAWINGS

Fig. 1 a diagram showing a schematic configuration of a communication system according to a first exemplary embodiment of the present invention;
Fig. 2 is a sequence diagram showing an example of a sequence executed for initiating a session between a first device and a second device in the communication system according to the first exemplary embodiment of the present invention;
Fig. 3 is a block diagram showing a function of a communication control device according to the first exemplary embodiment of the present invention;
Fig. 4 is a view showing an example of scenario information according to the first exemplary embodiment of the present invention;
Fig. 5 is a view showing an example of the scenario information according to the first exemplary embodiment of the present invention;
Fig. 6 is a view showing an example of the scenario information according to the first exemplary embodiment of the present invention;
Fig. 7 is a view showing an example of the scenario information according to the first exemplary embodiment of the present invention;
Fig. 8 is a sequence diagram showing an operation of the communication system according to the first exemplary embodiment of the present invention;
Fig. 9 is a sequence diagram showing an operation of the communication system according to the first exemplary embodiment of the present invention;
Fig. 10 is a sequence diagram showing an operation of the communication system according to the first exemplary embodiment of the present invention;
Fig. 11 is a sequence diagram showing an operation of the communication system according to the first exemplary embodiment of the present invention; and
Fig. 12 is a block diagram showing a function of a communication control device according to a second exemplary embodiment of the present invention.

### EXEMPLARY EMBODIMENTS

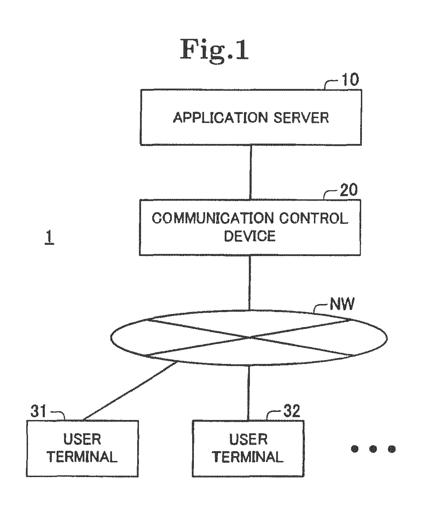

Below, the respective exemplary embodiments of a communication control device, a communication control method and a communication control program according to the present invention will be described referring to Figs. 1 to 12.

### <First Exemplary Embodiment>

### (Configuration)

As shown in Fig. 1, a communication system 1 according to a first exemplary embodiment includes an application server 10, a communication control device 20, and a plurality of user terminals 31, 32, .... The application server 10 and the communication control device 20 are connected so as to be capable of communicating with each other.

Further, the communication control device 20 and each of the user terminals 31, 32, ... are connected via a communication network (in this exemplary embodiment, a SIP (Session Initiation Protocol) network) NW so as to be capable of communicating with each other. The communication network NW is configured by a plurality of server devices (in this exemplary embodiment, SIP servers) connected so as to be capable of communicating with each other.

The application server 10 is an information processing device. The application server 10 includes a central processing unit (CPU) and a storage device (a memory and a hard disk drive (HDD)), which are not shown in the drawings. The application server 10 is configured to realize a function described later by the CPU's execution of a program stored in the storage device.

The communication control device 20 is an information processing device. The communication control device 20 includes a CPU, a storage device (a memory and a HDD), an input device (in this exemplary embodiment, a keyboard, a mouse, etc.) and an output device (in this exemplary embodiment, a display), which are not shown in the drawings. The communication control device 20 is configured to realize a function described later by the CPU's execution of a program stored in the storage device.

Each of the user terminals 31, 32, ... is a mobile phone terminal. Alternatively, each of the user terminals 31, 32, ... may be a landline phone, a personal computer, a PHS (Personal Handyphone System), a PDA (Personal Data Assistance, Personal Digital Assistant), a smartphone, a car navigation terminal, a game terminal, or the like.

Each of the user terminals 31, 32, ... includes a CPU, a storage device (a memory), an input device (in this exemplary embodiment, a key) and an output device (in this exemplary embodiment, a display), which are not shown in the drawings. Each of the user terminals 31, 32, ... is configured to realize a function described later by the CPU's execution of a program stored in the storage device.

### (Function)

The application server 10, the communication control device 20, and each of the user terminals 31, 32, ... (each device) have a function of executing a communication event. A communication event is transmission or reception of a message in accordance with the SIP.

The application server 10 and the communication control device 20 execute a sequence including a plurality of communication events executed one by one in order, thereby initiating a session between the application server 10 serving as a communication device and the communication control device 20.

Likewise, the user terminal 31 and the communication control device 20 execute a sequence including a plurality of communication events executed one by one in order, thereby initiating a session between the user terminal 31 serving as a communication device and the communication control device 20. Also, the other user terminals 32, ... have the same function as the user terminal 31.

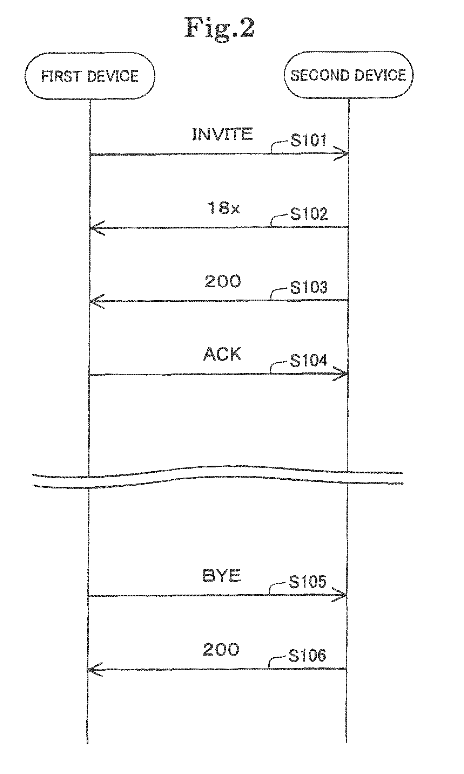

To be specific, as shown in Fig. 2, communication events in steps S101 to S 104 are executed in order, and a session is thereby initiated between a first device and a second device.

Firstly, the first device transmits an INVITE message (a message with "INVITE" set as the method) of SIP messages to the second device (step S101).

Next, the second device transmits an 18x message (a response including "18x" as the status code on the start line: herein, "x" denotes an integer of 0 to 9) of SIP messages to the first device (step S 102).

After that, the second device transmits a 200 message (a response including "200" as the status code and "OK" on the start line) of SIP messages to the first device (step S103).

Next, the first device transmits an ACK message (a message with "ACK" set as the method) of SIP messages to the second device (step S104).

In this manner, a session is initiated between the first device and the second device.

Then, the first device and the second device perform communication by using the initiated session.

After that, the first device transmits a BYE message (a message with "BYE" set as the method) of SIP messages to the second device (step S105).

Next, the second device transmits a 200 message of SIP messages to the first device (step S 106).

Thus, the session initiated between the first device and the second device is closed. Alternatively, the second device may transmit a BYE message to the first device.

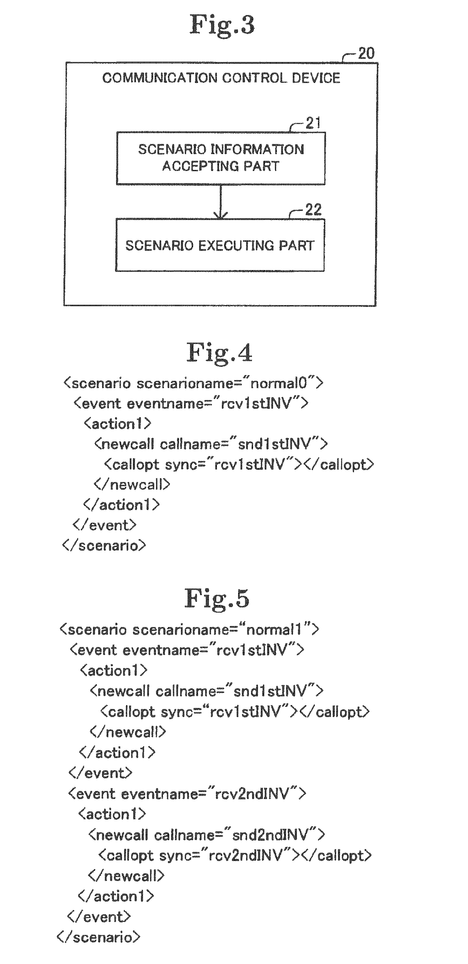

The function of the communication control device 20 includes a scenario information accepting part (a scenario information accepting means) 21 and a scenario executing part (a scenario executing means) 22 as shown in Fig. 3.

The scenario information accepting part 21 accepts scenario information inputted by the user via the input device. Alternatively, the scenario information accepting part 21 may be configured to receive scenario information from another device and accept the received scenario information. Alternatively, the scenario information accepting part 21 may be configured to retrieve scenario information previously stored in the storage device and accept the retrieved scenario information.

In this exemplary embodiment, the scenario information accepting part 21 stores accepted scenario information into the storage device.

In this exemplary embodiment, scenario information is information written in accordance with XML (Extensible Markup Language). Alternatively, scenario information may be information written in accordance with a format other than the XML. The names given to the components in this exemplary embodiment are examples. That is to say, as the names of the components, names other than the names shown in this exemplary embodiment may be given.

Scenario information includes sequence execution instruction information. Sequence execution instruction information is information associated with a communication event (also simply referred to as an "event" hereinafter). Moreover, sequence execution instruction information is information instructing to newly execute a sequence. In addition, sequence execution instruction information includes synchronization information.

Synchronization information is information representing whether to synchronize a first sequence that is the newly executed sequence and a second sequence that is another sequence.

In an example of scenario information, "normal0" is set as the value of an attribute "scenarioname" of an element "scenario" as shown in Fig. 4. The value of the attribute "scenarioname" represents the name of a scenario.

Further, "rcv1stINV" is set as the value of an attribute "eventname" of a child element "event" of the element "scenario." The element "event" represents an operation on an event that has occurred. The value of the attribute "eventname" is information for specifying the event. Moreover, "rcv" represents reception, "1st" represents the first, and "INV" represents an INVITE message. That is to say, "rcv1stINV" represents an event that is reception of the first INVITE message.

In addition, a child element "actionX (X represents an integer of 1 or more; X represents 1 herein)" of the element "event" represents a process in the event. X represents the order of processes, and represents a process executed earlier as X is smaller. In other words, processes provided with the same X are executed asynchronously.

Further, "snd1stINV" is set as the value of an attribute "callname" of a child element "newcall" of an element "action 1." The element "newcall" instructs to newly execute a sequence for initiating a session. The value of the attribute "callname" represents the name of the sequence.

In addition, "rcv1 stINV" is set as the value of an attribute "sync" of a child element "callopt" of the element "newcall." The element "callopt" represents an option (additional information) for newly executing a sequence. The value of the attribute "sync" is information for specifying a sequence to be synchronized.

The value of the attribute "eventname," the value of the attribute "callname," or "none" is set as the value of the attribute "sync." In a case where the value of the attribute "eventname" or the value of the attribute "callname" is set as the value the attribute "sync," the value of the attribute "sync" represents synchronizing with a sequence specified by the value. In a case where "none" is set, the value of the attribute "sync" represents synchronizing with no sequence.

Thus, the element "newcall" configures the sequence execution instruction information. Moreover, the value of the attribute "sync" of the element "callopt" configures the synchronization information. Besides, the value of the attribute "eventname" of the element "event" including the element "newcall" as an element configures information for specifying an event associated with the sequence execution instruction information.

As described later, in the case of synchronizing a first sequence and a second sequence, the scenario executing part 22 executes each of the remaining communication events in the second sequence after the time of start of execution of the first sequence, immediately after executing a corresponding communication event in the first sequence.

Further, as described later, in the case of synchronizing a first sequence and a second sequence, when one of a first session initiated by the first sequence and a second session initiated by the second sequence is closed, the scenario executing part 22 closes the other.

Fig. 5 shows another example of scenario information. In this example, an element "scenario" includes two child elements "event." Thus, scenario information may include a plurality of elements "event."

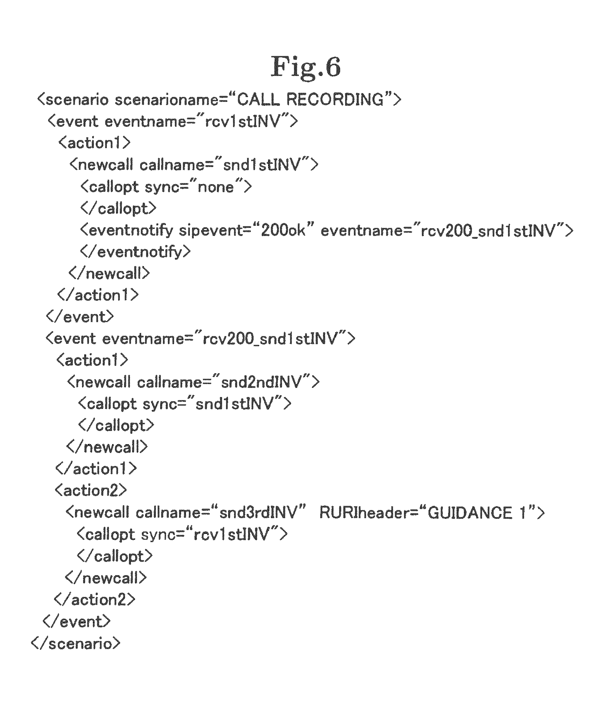

Fig. 6 shows another example of scenario information. In this example, an element "newcall" includes a child element "eventnotify." As the value of an attribute "sipevent" of the element "eventnotify," "200ok" is set. As the value of an attribute "eventname" of the element "eventnotify," "rcv200_snd1stINV" is set.

The element "eventnotify" instructs to execute an event specified by the value of the attribute "eventname" when an event specified by the value of the attribute "sipevent" occurs (is executed). In this example, the element "eventnotify" represents executing an event specified by "rcv200_snd1stINV" when receiving a 200 message.

Further, as the value of an attribute "RURIheader" of the element "newcall," "guidance1" is set. The value of the attribute "RURIheader" represents a RURI (Request Uniform Resource Identifier) header of a newly executed sequence.

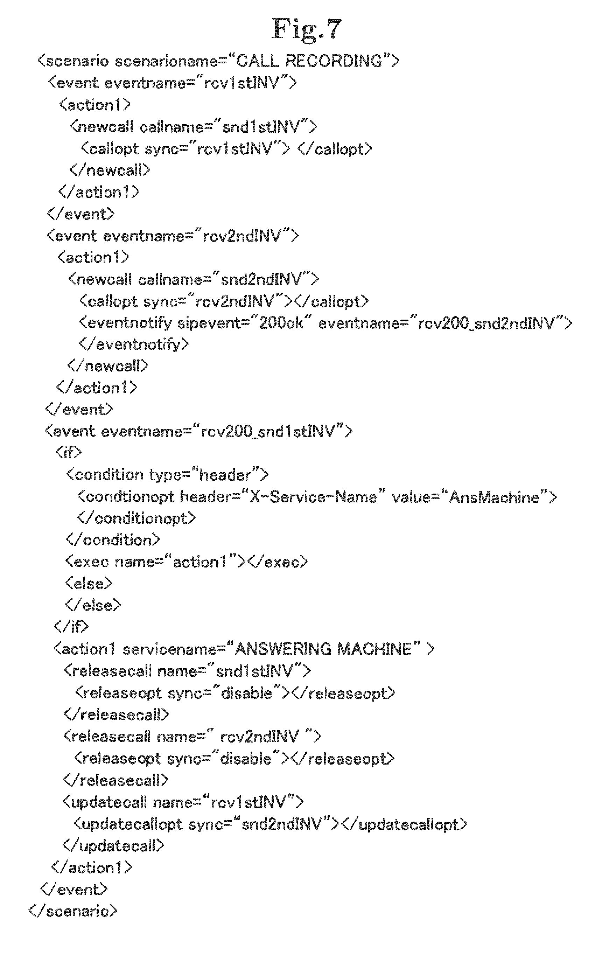

Fig. 7 shows another example of scenario information. In this example, an element "event" includes a child element "if." The element "if" includes a child element "condition," a child element "exec," and a child element "else."

As the value of an attribute "type" of the element "condition," "header" is set. The element "condition" includes a child element "conditionopt." As the value of the attribute "header" of the element "conditionopt," "X-Service-Name" is set. Moreover, as the value of an attribute "value" of the element "conditionopt," "AnsMachine" is set.

As the value of an attribute "name" of the element "exec," "action1" is set.

The element "if" represents determining whether information specified by the value of the attribute "type" of the element "condition" satisfies a condition defined by the element "conditionopt." Moreover, the element "if" represents executing a process specified by the element "exec" in a case where the information satisfies the condition, and represents executing a process specified by the element "else" in a case where the information does not satisfy the condition.

In this exemplary embodiment, the element "if" represents executing a process specified by "action1" in a case where the value of "X-Service-Name" within the header included in a received message is "AnsMachine," and represents executing no process in a case where the value is not "AnsMachine."

Further, the element "action1" includes a child element "releasecall" and a child element "updatecall."

In this example, "snd1stINV" is set as the value of an attribute "name" of the element "releasecall." Moreover, "disable" is set as the value of an attribute "sync" of a child element "releaseopt" of the element "releasecall."

The element "releasecall" instructs to close a session initiated by a sequence specified by the value of the attribute "name." In a case where "disable" is set as the value of the attribute "sync" of the element "releaseopt," even if a sequence synchronized with the sequence relating to the session to be closed exists, the element "releasecall" does not cause to close a session initiated by the sequence.

Thus, the value of the attribute "sync" of the element "releaseopt" configures synchronism release instruction information that instructs to release synchronism of a first sequence and a second sequence. Moreover, the value of the attribute "eventname" of the element "event" including the element "releaseopt" as an element configures information for specifying an event associated with the synchronism release instruction information.

Further, in the above example, "rcv1stINV" is set as the value of an attribute "name" of the element "updatecall." Moreover, "snd2ndINV" is set as the value of an attribute "sync" of a child element "updatecallopt" of the element "updatecall."

The element "updatecall" instructs to synchronize a sequence specified by the value of the attribute "name" and a sequence specified by the value of the attribute "sync" of the element "updatecallopt"

In this manner, the value of the attribute "sync" of the element "updatecallopt" configures synchronization setting instruction information that instructs to synchronize a first sequence and a second sequence. Moreover, the value of the attribute "eventname" of the element "event" including the element "updatecall" as an element configures information for specifying an event associated with the synchronization setting instruction information.

The scenario executing part 22 executes a sequence based on scenario information accepted by the scenario information accepting part 21. In this exemplary embodiment, when receiving a first message, the scenario executing part 22 selects one of the scenario information stored by the storage device. For example, the scenario executing part 22 selects scenario information based on information included in the received message (e.g., the address of a transmission destination, the address of a transmission source), the time and date when the message has been received, and so on.

To be specific, the scenario executing part 22 parses scenario information (analyzes the syntax of scenario information).

Then, the scenario executing part 22 executes a certain sequence. Moreover, the scenario executing part 22 stands by until an event associated with a process in the scenario information is executed. When the event is executed during execution of the sequence, the scenario executing part 22 executes the process associated with the event.

More specifically, in a case where the event associated with sequence execution instruction information included by the scenario information accepted by the scenario information accepting part 21 is executed during execution of the certain sequence, the scenario executing part 22 newly executes a sequence (a first sequence) based on synchronization information included by the sequence execution instruction information.

Further, in a case where the synchronization information represents synchronizing the first sequence and the second sequence, the scenario executing part 22 executes each of the remaining communication events in the second sequence after the time of start of execution of the first sequence, immediately after executing a corresponding communication event in the first sequence.

Alternatively, the scenario executing part 22 may be configured to, in a case where the synchronization information represents synchronizing the first sequence and the second sequence, execute each of the remaining communication events in the second sequence after the time of start of execution of the first sequence, almost simultaneously with (e.g., immediately before or simultaneously with) the time of execution of a corresponding communication event in the first sequence.

Besides, in a case where the synchronization information represents synchronizing the first sequence and the second sequence, when one of a first session initiated by the first sequence and a second session initiated by the second sequence is closed, the scenario executing part 22 closes the other.

Further, in a case where the synchronization information represents synchronizing the first sequence and the second sequence, the scenario executing part 22 synchronizes media information. To be specific, when first media information received from a first communication device serving as a communication device of a communication destination in one of the first sequence and the second sequence is different from second media information transmitted to a second communication device serving as a communication device of a communication destination in the other of the first sequence and the second sequence, the scenario executing part 22 retransmits the first media information to the second communication device.

In addition, the scenario executing part 22 releases synchronism of the first sequence and the second sequence after the time of execution of a communication event associated with synchronism release instruction information included in scenario information accepted by the scenario information accepting part 21 during execution of the above sequences.

Further, the scenario executing part 22 synchronizes the first sequence and the second sequence after the time of execution of a communication event associated with synchronization setting instruction information included in scenario information accepted by the scenario information accepting part 21 during execution of the above sequences.

### (Operation)

Next, an operation of the abovementioned communication system 1 will be described.

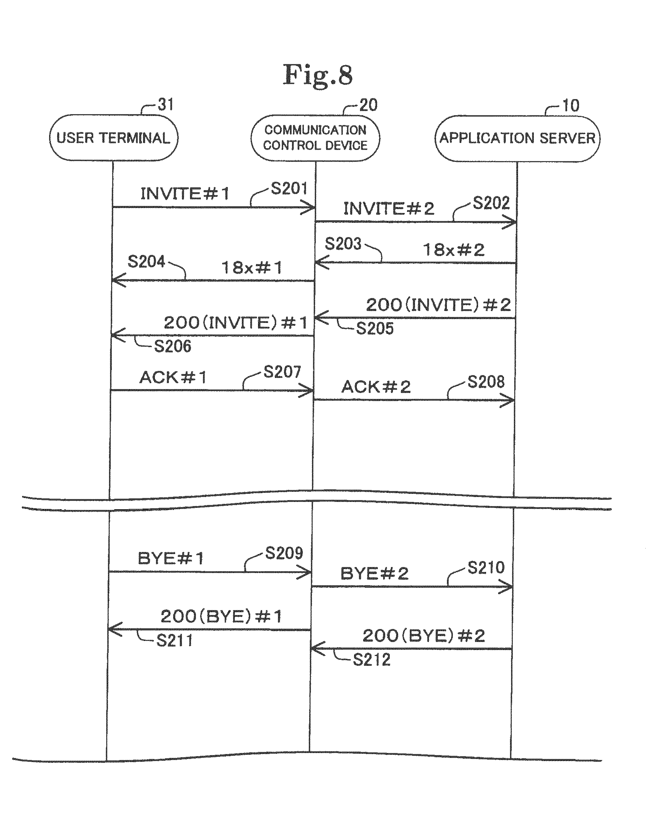

It is assumed that the communication control device 20 selects the scenario information shown in Fig. 4. In this case, firstly, the user terminal 31 transmits an INVITE message to the communication control device 20 as shown in Fig. 8 (step S201).

Consequently, the communication control device 20 receives a first INVITE message. That is to say, the communication control device 20 executes a sequence #1 for initiating a session with the user terminal 31. In addition, the communication control device 20 detects that an event (i.e., reception of the first INVITE message) specified by a value "rcv1stINV" of an attribute "eventname" of an element "event" has been executed.

The communication control device 20 newly executes a sequence #2 for initiating a session with the application server 10. The newly executed sequence is a sequence specified by "snd1stINV" Moreover, the communication control device 20 synchronizes the newly executed sequence #2 (a first sequence) and the sequence #1 (i.e., a sequence specified by "rcv1 stINV: a second sequence) for initiating a session with the user terminal 31.

After that, the communication control device 20 executes each of the remaining communication events in the second sequence (in this exemplary embodiment, transmission of an 18x message, and transmission of a 200 message) immediately after execution of a corresponding communication event in first sequence (in this exemplary embodiment, reception of an 18x message, and reception of a 200 message).

Further, the communication control device 20 executes transmission of an ACK message in the first sequence immediately after executing a corresponding communication event in the second sequence (reception of the ACK message).

More specifically, the communication control device 20 transmits an INVITE message to the application server 10 (step S202). Thus, the application server 10 transmits an 18x message to the communication control device 20 (step S203).

Upon reception of the 18x message from the application server 10, the communication control device 20 transmits an 18x message to the user terminal 31 (step S204). That is to say, until a corresponding event in the first sequence is executed, the communication control device 20 stands by execution of a next event in the second sequence.

After that, the application server 10 transmits a 200 message to the communication control device 20 (step S205). Upon reception of the 200 message from the application server 10, the communication control device 20 transmits a 200 message to the user terminal 31 (step S206).

After that, the user terminal 31 transmits an ACK message to the communication control device 20 (step S207). Consequently, a session between the user terminal 31 and the communication control device 20 is initiated.

Further, upon reception of the ACK message from the user terminal 31, the communication control device 20 transmits an ACK message to the application server 10 (step S208). Consequently, a session between the application server 10 and the communication control device 20 is initiated.

After that, the user terminal 31 transmits a BYE message to the communication control device 20 (step A209). Upon reception of the BYE message from the user terminal 31, the communication control device 20 transmits a BYE message to the application server 10 (step S210). Moreover, the communication control device 20 transmits a 200 message to the user terminal 31 (step S211). Consequently, the session between the user terminal 31 and the communication control device 20 is closed.

Further, the application server 10 transmits a 200 message to the communication control device 20 (step S212). Consequently, the session between the application server 10 and the communication control device 20 is also closed.

In this manner, when the second session initiated by the second sequence is closed, the communication control device 20 also closes the first session initiated by the first sequence.

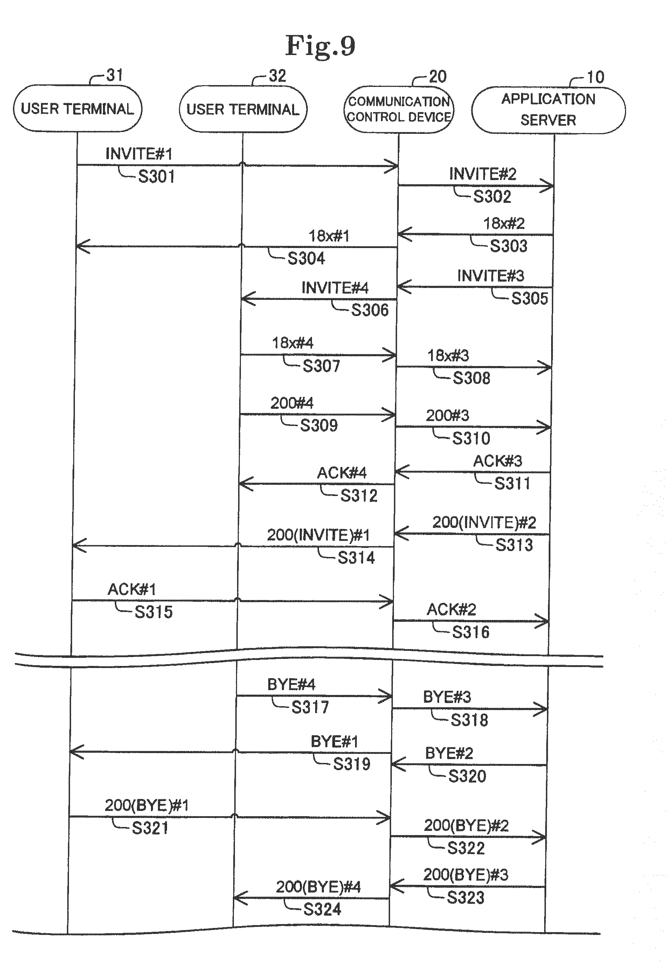

Next, it is assumed that the communication control device 20 selects the scenario information shown in Fig. 5. In this case, firstly, the user terminal (a first user terminal) 31 transmits an INVITE message to the communication control device 20 as shown in Fig. 9 (step S301).

Consequently, the communication control device 20 receives a first INVITE message. That is to say, the communication control device 20 executes a sequence #1 for initiating a session with the first user terminal 31. In addition, the communication control device 20 detects that an event (i.e., reception of the first INVITE message) specified by a value "rcv1 stINV" of an attribute "eventname" of an element "event" has been executed.

The communication control device 20 newly executes a sequence #2 for initiating a session with the application server 10. The newly executed sequence is a sequence specified by "snd1stINV" Moreover, the communication control device 20 synchronizes the newly executed sequence #2 (a first sequence) and the sequence #1 (i.e., a sequence specified by "rcv1stINV": a second sequence) for initiating the session with the first user terminal 31.

More specifically, the communication control device 20 transmits an INVITE message to the application server 10 (step S302). Consequently, the application server 10 transmits an 18x message to the communication control device 20 (step S303).

Upon reception of the 18x message from the application server 10, the communication control device 20 transmits an 18x message to the user terminal 31 (step S304).

After that, for newly initiating a session with the communication control device 20, the application server 10 transmits an INVITE message to the communication control device 20 (step S305).

Consequently, the communication control device 20 receives the second INVITE message. That is to say, the communication control device 20 executes a sequence #3 for initiating a session with the application server 10. In addition, the communication control device 20 detects that an event (i.e., reception of the second INVITE message) specified by a value "rcv2ndINV" of an attribute "eventname" of an element "event" has been executed.

The communication control device 20 newly executes a sequence #4 for initiating a session with the second user terminal 32. The newly executed sequence is a sequence specified by "snd2ndINV" Moreover, the communication control device 20 synchronizes the newly executed sequence #4 (a first sequence) and the sequence #3 (i.e., the sequence specified by "rcv2ndINV": a second sequence) for establishing the session with the application server 10.

More specifically, the communication control device 20 transmits an INVITE message to the second user terminal 32 (step S306). Consequently, the second user terminal 32 transmits an 18x message to the communication control device 20 (step S307). Upon reception of the 18x message from the second user terminal 32, the communication control device 20 transmits an 18x message to the application server 10 (step S308).

After that, the second user terminal 32 transmits a 200 message in response to the INVITE message received in step S306, to the communication control device 20 (step S309). Upon reception of the 200 message from the second user terminal 32, the communication control device 20 transmits a 200 message in response to the INVITE message received in step S305, to the application server 10 (step S310).

After that, the application server 10 transmits an ACK message to the communication control device 20 (step S311). Consequently, a session between the application server 10 and the communication control device 20 is initiated.

Further, upon reception of the ACK message from the application server 10, the communication control device 20 transmits an ACK message to the second user terminal 32 (step S312). Consequently, a session between the second user terminal 32 and the communication control device 20 is initiated.

After that, the application server 10 transmits a 200 message in response to the INVITE message received in step S302, to the communication control device 20 (step S313). Upon reception of the 200 message from the application server 10, the communication control device 20 transmits a 200 message in response to the INVITE message received in step S301, to the first user terminal 31 (step S314).

After that, the first user terminal 31 transmits an ACK message to the communication control device 20 (step S315). Consequently, a session between the first user terminal 31 and the communication control device 20 is initiated.

Further, upon reception of the ACK message from the first user terminal 31, the communication control device 20 transmits an ACK message to the application server 10 (step S316). Consequently, a session between the application server 10 and the communication control device 20 is initiated.

After that, the second user terminal 32 transmits a BYE message to the communication control device 20 (step S317). Upon reception of the BYE message from the second user terminal 32, the communication control device 20 transmits a BYE message to the application server 10 (step S318).

Next, the communication control device 20 transmits a BYE message to the first user terminal 31 (step S319). Moreover, the application server 10 transmits a BYE message to the communication control device 20 (step S320).

Next, the first user terminal 31 transmits a 200 message in response to the BYE message received in step S319, to the communication control device 20 (step S321). Consequently, the session between the first user terminal 31 and the communication control device 20 (the session initiated by execution of the sequence #1) is closed.

Further, the communication control device 20 transmits a 200 message in response to the BYE message received in step S320, to the application server 10 (step S322). Consequently, the session between the application server 10 and the communication control device 20 (the session initiated by execution of the sequence #2) is closed.

In this manner, the communication control device 20 closes the session initiated by the sequence "2 when the session initiated by the sequence #1 is closed.

Further, the application server 10 transmits a 200 message in response to the BYE message received in step S318, to the communication control device 20 (step S323). Consequently, the session between the application server 10 and the communication control device 20 (the session initiated by execution of the sequence #3) is closed.

Next, the communication control device 20 transmits a 200 message in response to the BYE message received in step S317, to the second user terminal 32 (step S324). Consequently, the session between the second user terminal 32 and the communication control device 20 (the session initiated by execution of the sequence #4) is closed.

In this manner, the communication control device 20 closes the session initiated by the sequence #4 when the session initiated by the sequence #3 is closed.

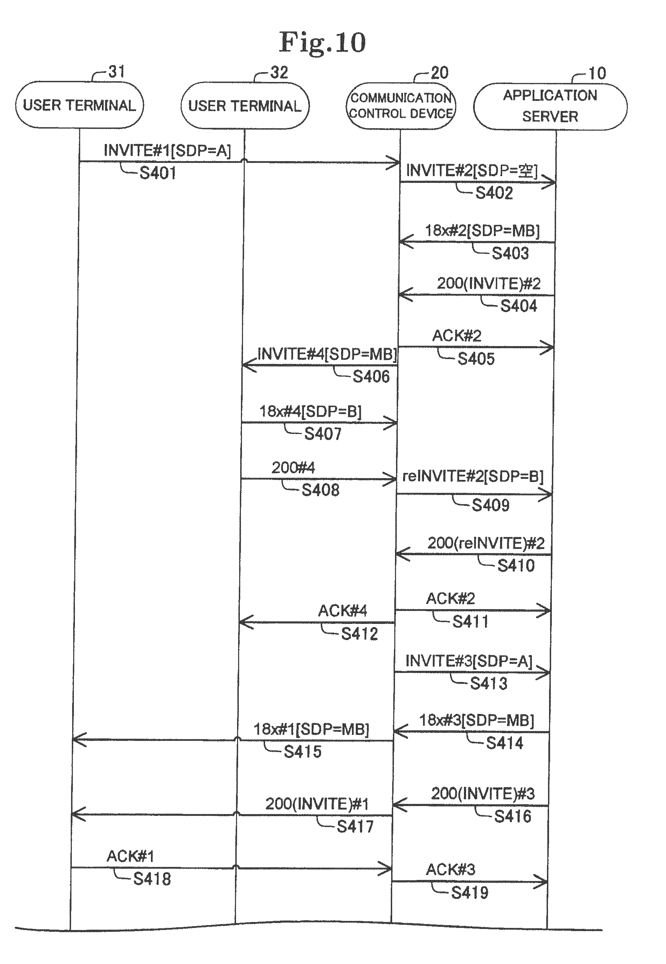

Next, it is assumed that the communication control device 20 selects the scenario information shown in Fig. 6. In this case, firstly, the user terminal (a first user terminal) 31 transmits an INVITE message to the communication control device 20 as shown in Fig. 10 (step S401).

This INVITE message includes media information "A" set for the first user terminal 31. In this exemplary embodiment, media information is information written in accordance with SDP (Session Description Protocol).

Consequently, the communication control device 20 receives a first INVITE message. That is to say, the communication control device 20 executes a sequence #1 for initiating a session with the first user terminal 31. Besides, the communication control device 20 detects that an event (i.e., reception of the first INVITE message) specified by a value "rcv1stINV" of an attribute "eventname" of an element "event" has been executed.

Thus, the communication control device 20 newly executes a sequence #2 for initiating a session with the application server 10. This newly executed sequence is a sequence specified by "snd1stINV" The communication control device 20 does not synchronize this newly executed sequence #2 (a first sequence) and the sequence #1 for initiating the session with the first user terminal 31 (i.e., the sequence specified by "rcv1stINV": a second sequence).

More specifically, the communication control device 20 transmits an INVITE message to the application server 10 (step S402). This INVITE message includes empty media information "" herein.

Consequently, the application server 10 transmits an 18x message to the communication control device 20 (step S403). This 18x message includes media information "MB" set for the application server 10.

After that, the application server 10 transmits a 200 message in response to the INVITE message received in step S402, to the communication control device 20 (step S404).

Consequently, the communication control device 20 receives the 200 message in the sequence specified by a value "snd1stINV" of an attribute "callname" of an element "newcall." That is to say, the communication control device 20 detects that an event (i.e., reception of the 200 message) specified by a value "200ok" of an attribute "sipevent" of an element "eventnotify" has been executed.

Further, the communication control device 20 transmits an ACK message to the application server 10 (step S405). Consequently, a session between the application server 10 and the communication control device 20 is initiated.

Next, the communication control device 20 newly executes a sequence #4 for initiating a session with the second user terminal 32. This newly executed sequence is a sequence specified by "snd2ndINV" The communication control device 20 synchronizes the newly executed sequence #4 (a first sequence) and the sequence #2 for initiating with the application server 10 (i.e., the sequence specified by "snd1stINV": a second sequence).

More specifically, the communication control device 20 transmits an INVITE message to the second user terminal 32 (step S406). This INVITE message contains the media information "MB" included in the 18x message received in step S403.

Consequently, the second user terminal 32 transmits an 18x message to the communication control device 20 (step S407). This message includes media information "B" set for the second user terminal 32. After that, the second user terminal 32 transmits a 200 message in response to the INVITE message received in step S406, to the communication control device 20 (step S408).

The communication control device 20 determines whether the media information (first media information) received from the second user terminal 32 (a first communication device serving as a communication device of a communication destination) in the sequence #4 (the first sequence) is identical to the media information (second media information) transmitted to the application server 10 (a second communication device serving as a communication device of a communication destination) in the sequence #2 (the second sequence).

In this case, while the first media information is "B," the second media information is empty information. Therefore, the communication control device 20 determines that the first media information is different from the second media information. Consequently, the communication control device 20 retransmits the first media information to the application server 10 (the second communication device).

To be specific, the communication control device 20 transmits a reINVITE message (a message with "INVITE" set as a method) to the application server 10 (step S409). This reINVITE message includes the media information "B" included in the 18x message received in step S407.

After that, the application server 10 transmits a 200 message in response to the reINVITE message received in step S409, to the communication control device 20 (step S410).

Next, the communication control device 20 transmits an ACK message to the application server 10 (step S411). Consequently, a session between the application server 10 and the communication control device 20 is initiated.

Next, the communication control device 20 transmits an ACK message to the second user terminal 32 (step S412). Consequently, a session between the second user terminal 32 and the communication control device 20 is initiated.

Next, the communication control device 20 newly executes a sequence #3 for initiating a session with the application server 10. This newly executed sequence is a sequence specified by "snd3rdINV." The communication control device 20 synchronizes this newly executed sequence #3 (a first sequence) and the sequence #1 (i.e., the sequence specified by "rcv1 stINV": a second sequence) for initiating the session with the first user terminal 31.

More specifically, the communication control device 20 transmits an INVITE message to the application server 10 (step S413). This INVITE message includes the media information "A" included in the INVITE message received in step S401.

Consequently, the application server 10 transmits an 18x message to the communication control device 20 (step S414). This message includes the media information "MB" set for the application server 10.

Upon reception of the 18x message from the application server 10, the communication control device 20 transmits an 18x message to the first user terminal 31 (step S415). This message includes the media information "MB" received in step S416.

After that, the application server 10 transmits a 200 message in response to the INVITE message received in step S413, to the communication control device 20 (step S416). Upon reception of the 200 message from the application server 10, the communication control device 20 transmits a 200 message in response to the INVITE message received in step S401, to the first user terminal 31 (step S417).

Next, the first user terminal 31 transmits an ACK message to the communication control device 20 (step S418). Consequently, a session between the first user terminal 31 and the communication control device 20 is initiated.

Next, the communication control device 20 transmits an ACK message to the application server 10 (step S419). Consequently, a session between the application server 10 and the communication control device 20 is initiated.

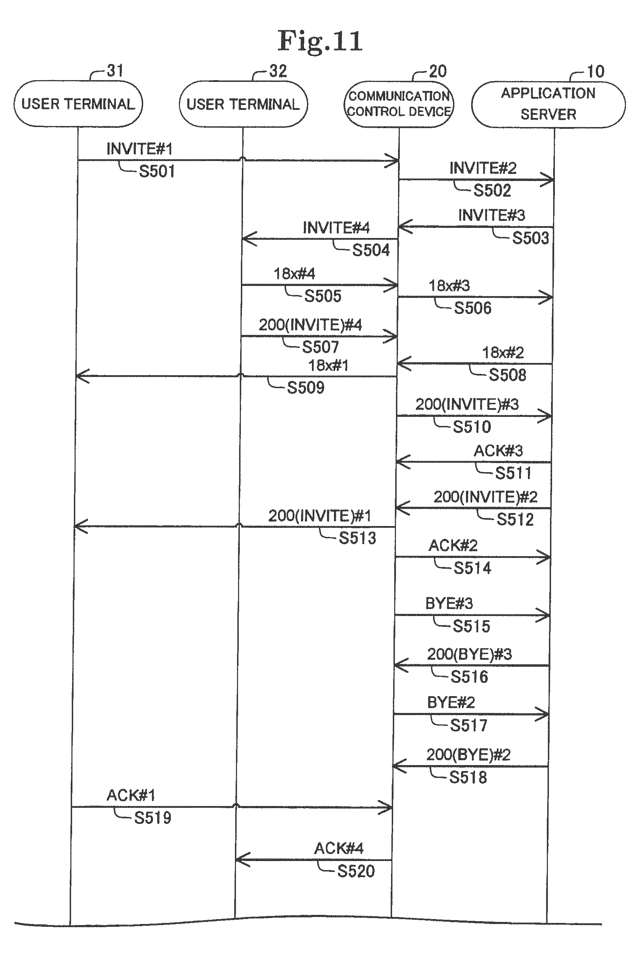

Next, it is assumed that the communication control device 20 selects the scenario information shown in Fig. 7. In this case, firstly, the user terminal (a first user terminal) 31 transmits an INVITE message to the communication control device 20 as shown in Fig. 11 (step S501).

Consequently, the communication control device 20 receives a first INVITE message. That is to say, the communication control device 20 executes a sequence #1 for initiating a session with the first user terminal 31. Besides, the communication control device 20 detects that an event (i.e., reception of the first INVITE message) specified by a value "rcv1 stINV" of an attribute "eventname" of an element "event."

Thus, the communication control device 20 newly executes a sequence #2 for initiating a session with the application server 10. This newly executed sequence is a sequence specified by "snd1 stINV." The communication control device 20 synchronizes this newly executed sequence #2 (a first sequence) and the sequence #1 for initiating the session with the first user terminal 31 (i.e., the sequence specified by "rcv1stINV": a second sequence).

More specifically, the communication control device 20 transmits an INVITE message to the application server 10 (step S502).

After that, the application server 10 transmits an INVITE message to the communication control device 20 to newly initiate a session with the communication control device 20 (step S503).

Consequently, the communication control device 20 receives a second INVITE message. That is to say, the communication control device 20 executes a sequence #3 for initiating a session with the application server 10. Besides, the communication control device 20 detects that an event (i.e., reception of the second INVITE message) specified by a value "rcv2ndINV" of an attribute "eventname" of an element "event" has been executed.

Thus, the communication control device 20 newly executes a sequence #4 for initiating a session with the second user terminal 32. This newly executed sequence is a sequence specified by "snd2ndINV" The communication control device 20 synchronizes this newly executed sequence #4 (a first sequence) and the sequence #3 (i.e., the sequence specified by "rcv2ndINV": a second sequence) for initiating a session with the application server 10.

More specifically, the communication control device 20 transmits an INVITE message to the second user terminal 32 (step S504). Consequently, the second user terminal 32 transmits an 18x message to the communication control device 20 (step S505). Upon reception of the 18x message from the second user terminal 32, the communication control device 20 transmits an 18x message to the application server 10 (step S506).

After that, the second user terminal 32 transmits a 200 message in response to the INVITE message received in step S504, to the communication control device 20 (step S507).

Consequently, the communication control device 20 receives the 200 message in the sequence specified by a value "snd2ndINV" of an attribute "callname" of an element "newcall." That is to say, the communication control device 20 detects that an event (i.e., reception of the 200 message) specified by a value "200ok" of an attribute "sipevent" of an element "eventnotify" has been executed.

Next, an 18x message is transmitted to the communication control device 20 (step S508). Upon reception of the 18x message from the application server 10, the communication control device 20 transmits an 18x message to the first user terminal 31 (step S509).

After that, the communication control device 20 transmits a 200 message in response to the INVITE message received in step S503, to the application server 10 (step SS10).

Next, the application server 10 transmits an ACK message to the communication control device 20 (step S511). Consequently, a session between the application server 10 and the communication control device 20 is initiated.

Next, the application server 10 transmits a 200 message in response to the INVITE message received in step S502, to the communication control device 20 (step S512). Upon reception of the 200 message from the application server 10, the communication control device 20 transmits a 200 message in response to the INVITE message received in step S501, to the first user terminal 31 (step S513).

Next, the communication control device 20 transmits an ACK message to the application server 10 (step S514). Consequently, a session between the application server 10 and the communication control device 20 is initiated.

In the 200 message that the communication control device 20 receives from the second user terminal 32 in step S507, the value of "X-Service-Name" within the header is "AnsMachine."

Therefore, the communication control device 20 closes the session initiated by the sequence #3 specified by a value "rcv2ndINV" of an attribute "name" of an element "releasecall." At this moment, the communication control device 20 does not close the session relating to the sequence #4 synchronized with the sequence #3 relating to the session to be closed. That is to say, the communication control device 20 releases synchronism of the sequence #3 and the sequence #4.

To be specific, the communication control device 20 transmits a BYE message to the application server 10 (step S515). Consequently, the application server 10 transmits a 200 message in response to the BYE message received in step S515, to the communication control device 20 (step S516).

Consequently, the session between the application server 10 and the communication control device 20 (the session initiated by execution of the sequence #3) is closed.

Further, the communication control device 20 closes the session initiated by the sequence #2 specified by a value "snd1stINV" of an attribute "name" of an element "releasecall." At this moment, the communication control device 20 does not close the session relating to the sequence #1 synchronized with the sequence #2 relating to the session to be closed. That is to say, the communication control device 20 releases synchronism of the sequence #2 and the sequence #1.

To be specific, the communication control device 20 transmits a BYE message to the application server 10 (step S517). Consequently, the application server 10 transmits a 200 message in response to the BYE message received in step S517, to the communication control device 20 (step S518).

Consequently, the session between the application server 10 and the communication control device 20 (the session initiated by execution of the sequence #2) is closed.

After that, the first user terminal 31 transmits an ACK message to the communication control device 20 (step S519). Consequently, a session between the first user terminal 31 and the communication control device 20 is initiated.

Next, the communication control device 20 transmits an ACK message to the second user terminal 32 (step S520). Consequently, a session between the second user terminal 32 and the communication control device 20 is initiated.

As described above, the communication control device 20 according to the first exemplary embodiment of the present invention is capable of controlling synchronism between a first sequence and a second sequence based on scenario information. Therefore, the user can easily control synchronism between sequences by properly setting scenario information.

Further, the communication control device 20 according to the first exemplary embodiment is configured to, in a case where synchronization information represents synchronizing a first sequence and a second sequence, execute each of the remaining communication events in the second sequence after the time of start of execution of the first sequence, almost simultaneously with the time of execution of a corresponding communication event in the first sequence.

Accordingly, the communication control device 20 is capable of more securely synchronizing a first sequence and a second sequence.

Further, the communication control device 20 according to the first exemplary embodiment is configured to, in a case where synchronization information represents synchronizing a first sequence and a second sequence, when one of a first session initiated by the first sequence and a second session initiated by the second sequence is closed, close the other.

Accordingly, it is possible to avoid meaningless continuation of a session.

Further, the communication control device 20 according to the first exemplary embodiment is configured to, in a case where synchronization information represents synchronizing a first sequence and a second sequence, when first media information received from a first communication device in one of the first sequence and the second sequence is different from second media information transmitted to a second communication device in the other sequence, retransmit the first media information to the second communication device.

Accordingly, the communication control device 20 is capable of matching media information between sequences to be synchronized based on scenario information.

### <Second Exemplary Embodiment>

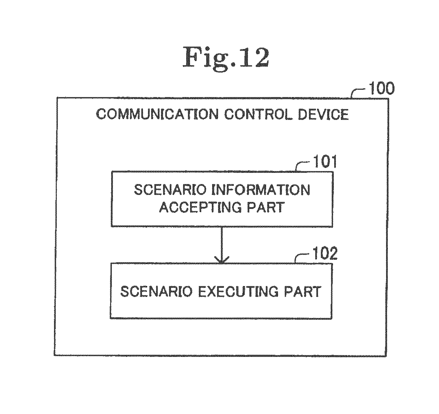

Next, a communication control device according to a second exemplary embodiment of the present invention will be described referring to Fig. 12.

A communication control device 100 according to the second exemplary embodiment is a device that initiates a session with a communication device by executing a sequence including a plurality of communication events executed one by one in order.

Moreover, the communication control device 100 includes:
a scenario information accepting part (a scenario information accepting means) 101 for accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
a scenario executing part (a scenario executing means) 102 for executing a certain sequence and, when the communication event associated with the sequence execution instruction information included by the accepted scenario information is executed while the sequence is being executed, newly executing a sequence based on the synchronization information included by the sequence execution instruction information.

Accordingly, the communication control device 100 is capable of controlling synchronism between a first sequence and a second sequence based on scenario information. Therefore, the user can easily control synchronism between sequences by properly setting scenario information.

Although the present invention has been described above referring to the exemplary embodiments, the present invention is not limited to the exemplary embodiments described above. The configuration and details of the present invention can be modified in various manners that can be understood by one skilled in the art within the scope of the present invention.

For example, in a modified example of the exemplary embodiments described above, the communication system may include a plurality of application servers.

Each of the functions of the communication system 1 in the respective exemplary embodiments described above is realized by the CPU'S execution of the program (software), but may be realized by hardware such as a circuit.

Further, the program is stored in the storage device in each of the exemplary embodiments described above, but may be stored in a computer-readable recording medium. For example, the recording medium is a portable medium such as a flexible disk, an optical disk, a magneto-optical disk and a semiconductor memory.

Further, as another modified example of the exemplary embodiments, any combination of the exemplary embodiments and modified examples described above may be employed.

### <Supplementary Notes>

The whole or part of the exemplary embodiments disclosed above can be described as, but not limited to, the following supplementary notes.

### (Supplementary Note 1)

A communication control device initiating a session with a communication device by executing a sequence including a plurality of communication events executed one by one in order, the communication control device including:
a scenario information accepting means for accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
a scenario executing means for executing a certain sequence and, when the communication event associated with the sequence execution instruction information included by the accepted scenario information is executed while the sequence is being executed, newly executing a sequence based on the synchronization information included by the sequence execution instruction information.

Accordingly, the communication control device can control synchronism between a first sequence and a second sequence based on scenario information. Therefore, the user can easily control synchronism between sequences by properly setting scenario information.

### (Supplementary Note 2)

The communication control device according to Supplementary Note 1, wherein the scenario executing means is configured to, in a case where the synchronization information represents synchronizing the first sequence and the second sequence, execute each of remaining communication events in the second sequence after a time of start of execution of the first sequence, almost simultaneously with a time of execution of a corresponding communication event in the first sequence.

Accordingly, the communication control device can more securely synchronize a first sequence and a second sequence.

### (Supplementary Note 3)

The communication control device according to Supplementary Note 2, wherein the scenario executing means is configured to, in a case where the synchronization information represents synchronizing the first sequence and the second sequence, execute each of remaining communication events in the second sequence after a time of start of execution of the first sequence, immediately after execution of a corresponding communication event in the first sequence.

### (Supplementary Note 4)

The communication control device according to any of Supplementary Notes 1 to 3, wherein the scenario executing means is configured to, in a case where the synchronization information represents synchronizing the first sequence and the second sequence, when one of a first session initiated by the first sequence and a second session initiated by the second sequence is closed, close the other sequence.

Accordingly, it is possible to avoid meaningless continuation of a session.

### (Supplementary Note 5)

The communication control device according to any of Supplementary Notes 1 to 4, wherein the scenario executing means is configured to, in a case where the synchronization information represents synchronizing the first sequence and the second sequence, when first media information received from a first communication device serving as a communication device of a communication destination in one of the first sequence and the second sequence is different from second media information transmitted to a second communication device serving as a communication device of a communication destination in the other sequence, retransmit the first media information to the second communication device.

Accordingly, the communication control device can match media information between sequences to be synchronized based on scenario information.

### (Supplementary Note 6)

The communication control device according to any of Supplementary Notes 1 to 5, wherein:
the scenario information includes synchronism release instruction information associated with a communication event and instructing to release synchronism of the first sequence and the second sequence; and
the scenario executing means is configured to release synchronism of the first sequence and the second sequence after a time of execution of the communication event associated with the synchronism release instruction information included by the accepted scenario information during execution of the sequence.

Accordingly, the communication control device can synchronism set between sequences based on scenario information.

### (Supplementary Note 7)

The communication control device according to any of Supplementary Notes 1 to 6, wherein:
the scenario information includes synchronization setting instruction information associated with a communication event and instructing to synchronize the first sequence and the second sequence; and
the scenario executing means is configured to synchronize the first sequence and the second sequence after a time of execution of the communication event associated with the synchronization setting instruction information included by the accepted scenario information during execution of the sequence.

Accordingly, the communication control device can synchronize sequences having not been synchronized, based on scenario information.

### (Supplementary Note 8)

The communication control device according to any of Supplementary Notes 1 to 7, wherein the communication event is transmission or reception of a message in accordance with SIP (Session Initiation Protocol).

### (Supplementary Note 9)

The communication control device according to any of Supplementary Notes 1 to 8, wherein the scenario information is information written in accordance with XML (Extensible Markup Language).

### (Supplementary Note 10)

A communication control method for initiating a session with a communication device by executing a sequence including a plurality of communication events executed one by one in order, the communication control method including:
accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
executing a certain sequence and, when the communication event associated with the sequence execution instruction information included by the accepted scenario information is executed while the sequence is being executed, newly executing a sequence based on the synchronization information included by the sequence execution instruction information.

### (Supplementary Note 11)

The communication control method according to Supplementary Note 10, including:
in a case where the synchronization information represents synchronizing the first sequence and the second sequence, executing each of remaining communication events in the second sequence after a time of start of execution of the first sequence, almost simultaneously with a time of execution of a corresponding communication event in the first sequence.

### (Supplementary Note 12)

A communication control program including instructions for causing a communication control device, which initiates a session with a communication device by executing a sequence including a plurality of communication events executed one by one in order, to perform operations of:
accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
executing a certain sequence and, when the communication event associated with the sequence execution instruction information included by the accepted scenario information is executed while the sequence is being executed, newly executing a sequence based on the synchronization information included by the sequence execution instruction information.

### (Supplementary Note 13)

The communication control program according to Supplementary Note 12, including instructions for causing the communication control device to perform operations of:
in a case where the synchronization information represents synchronizing the first sequence and the second sequence, executing each of remaining communication events in the second sequence after a time of start of execution of the first sequence, almost simultaneously with a time of execution of a corresponding communication event in the first sequence.

The present invention is based upon and claims the benefit of priority from Japanese patent application No. 2011-121237, filed on May 31, 2011, the disclosure of which is incorporated herein in its entirety by reference.

### INDUSTRIAL APPLICABILITY

The present invention is applicable to a communication control device, and the like, that initiates a session with a communication device by executing a sequence including a plurality of communication events.

### DESCRIPTION OF REFERENCE NUMERALS

- 1: communication system
- 10: application server
- 20: communication control device
- 21: scenario information accepting part
- 22: scenario executing part
- 31, 32: user equipment
- 100: communication control device
- 101: scenario information accepting part
- 102: scenario executing part
- NW: communication network

## Claims

1. A communication control device initiating a session with a communication device by executing a sequence including a plurality of communication events executed one by one in order, the communication control device comprising:
a scenario information accepting means for accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
a scenario executing means for executing a certain sequence and, when the communication event associated with the sequence execution instruction information included by the accepted scenario information is executed while the sequence is being executed, newly executing a sequence based on the synchronization information included by the sequence execution instruction information.

2. The communication control device according to Claim 1, wherein the scenario executing means is configured to, in a case where the synchronization information represents synchronizing the first sequence and the second sequence, execute each of remaining communication events in the second sequence after a time of start of execution of the first sequence, almost simultaneously with a time of execution of a corresponding communication
event in the first sequence.

3. The communication control device according to Claim 2, wherein the scenario executing means is configured to, in a case where the synchronization information represents synchronizing the first sequence and the second sequence, execute each of remaining communication events in the second sequence after a time of start of execution of the first sequence, immediately after execution of a corresponding communication event in the first sequence.

4. The communication control device according to any of Claims 1 to 3, wherein the scenario executing means is configured to, in a case where the synchronization information represents synchronizing the first sequence and the second sequence, when one of a first session initiated by the first sequence and a second session initiated by the second sequence is closed, close the other sequence.

5. The communication control device according to any of Claims 1 to 4, wherein the scenario executing means is configured to, in a case where the synchronization information represents synchronizing the first sequence and the second sequence, when first media information received from a first communication device serving as a communication device of a communication destination in one of the first sequence and the second sequence is different from second media information transmitted to a second communication device serving as a communication device of a communication destination in the other sequence, retransmit the first media information to the second communication device.

6. The communication control device according to any of Claims 1 to 5, wherein:
the scenario information includes synchronism release instruction information associated with a communication event and instructing to release synchronism of the first sequence and the second sequence; and
the scenario executing means is configured to release synchronism of the first sequence and the second sequence after a time of execution of the communication event associated with the synchronism release instruction information included by the accepted scenario information during execution of the sequence.

7. The communication control device according to any of Claims 1 to 6, wherein:
the scenario information includes synchronization setting instruction information associated with a communication event and instructing to synchronize the first sequence and the second sequence; and
the scenario executing means is configured to synchronize the first sequence and the second sequence after a time of execution of the communication event associated with the synchronization setting instruction information included by the accepted scenario information during execution of the sequence.

8. The communication control device according to any of Claims 1 to 7, wherein the communication event is transmission or reception of a message in accordance with SIP
(Session Initiation Protocol).

9. The communication control device according to any of Claims 1 to 8, wherein the scenario information is information written in accordance with XML (Extensible Markup Language).

10. A communication control method for initiating a session with a communication device by executing a sequence including a plurality of communication events executed one by one in order, the communication control method comprising:
accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
executing a certain sequence and, when the communication event associated with the sequence execution instruction information included by the accepted scenario information is executed while the sequence is being executed, newly executing a sequence based on the synchronization information included by the sequence execution instruction information.

11. The communication control method according to Claim 10, comprising:
in a case where the synchronization information represents synchronizing the first sequence and the second sequence, executing each of remaining communication events in the
second sequence after a time of start of execution of the first sequence, almost simultaneously with a time of execution of a corresponding communication event in the first sequence.

12. A communication control program comprising instructions for causing a communication control device, which initiates a session with a communication device by executing a sequence including a plurality of communication events executed one by one in order, to perform operations of:
accepting scenario information including sequence execution instruction information associated with a communication event, the sequence execution instruction information instructing to newly execute a sequence, and the sequence execution instruction information including synchronization information representing whether to synchronize a first sequence that is the newly executed sequence and a second sequence that is another sequence; and
executing a certain sequence and, when the communication event associated with the sequence execution instruction information included by the accepted scenario information is executed while the sequence is being executed, newly executing a sequence based on the synchronization information included by the sequence execution instruction information.

13. The communication control program according to Claim 12, comprising instructions for causing the communication control device to perform operations of:
in a case where the synchronization information represents synchronizing the first sequence and the second sequence, executing each of remaining communication events in the second sequence after a time of start of execution of the first sequence, almost simultaneously
with a time of execution of a corresponding communication event in the first sequence.
